Europäisches Patentamt

European Patent Office

Office européen des brevets

(11) Publication number: **0 287 717 B1**

# EUROPEAN PATENT SPECIFICATION

(45) Date of publication of patent specification: **12.06.91**   (51) Int. Cl.⁵: **F16D  27/10**

(21) Application number: **87302616.5**

(22) Date of filing: **26.03.87**

(54) **Spring clutch.**

(43) Date of publication of application:
**26.10.88 Bulletin  88/43**

(45) Publication of the grant of the patent:
**12.06.91 Bulletin  91/24**

(84) Designated Contracting States:
**DE FR GB NL**

(56) References cited:
**GB-A- 2 013 795**
**US-A- 3 521 730**
**US-A- 3 905 458**
**US-A- 3 970 175**

(73) Proprietor: **Shinko Electric Co. Ltd.**
**12-2, Nihonbashi 3-chome**
**Chuo-ku Tokyo 103(JP)**

(72) Inventor: **Ueno, Hirofumi c/o Shinko Electric**
**Co., Ltd.**
**Ise-Kohjoh, 100 Takegahana-cho**
**Ise-shi Mie-ken(JP)**

(74) Representative: **Read, Matthew Charles et al**
**Venner Shipley & Co. 368 City Road**
**London EC1V 2QA(GB)**

## Description

This invention relates to a spring clutch in which a coil spring is used for drivingly connecting and disconnecting an input shaft and an output shaft.

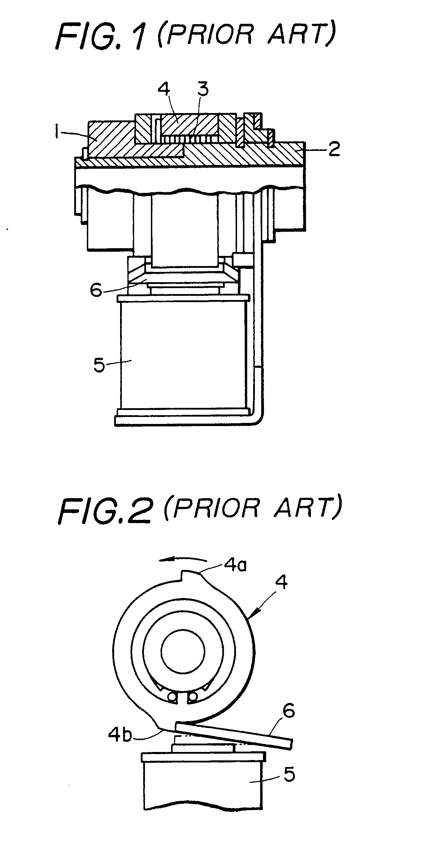

Heretofore, spring clutches have been used, for instance, in the paper feeding units of copying machines or in the driving units of rotary cutters. Figures 1 and 2 illustrate an example of a conventional clutch of this type. This clutch has a hollow input shaft member 1 and an output shaft member 2 which have a common axis of rotation. The input shaft 1 fits slidably around one end portion of the output shaft 2 for rotation about the output shaft 2. A coil spring 3 fits around both these input and output shafts 1 and 2. The coil spring 3 is attached at one of its ends to the output shaft 2 and at the other end to a collar member 4 which fits around the coil spring 3 for rotary movement about the common axis of the shafts 1, 2. A locking arm 6 is arranged beside the shafts 1 and 2 for radial movement relative to the collar member 4. Also, a solenoid 5 is arranged beside the locking arm 6, for actuating the locking arm 6. When the solenoid 5 is energised, the locking arm 6 is brought into contact with the solenoid 5 as shown by the phantom line in Figure 2. In this state, the collar 4 along with the coil spring 3 is free from the constraint of the locking arm 6. Thus, the rotation of the input shaft 1 causes the coil spring 3 to wind tightly around both the input and output shafts 1 and 2 so that the shafts 1 and 2 are drivingly connected to each other through the spring 3. When the solenoid 5 is de-energised, the locking arm 6 as shown by the solid line in Figure 2, engages with one of the projections 4a and 4b on the outer face of the collar 4. Due to this engagement, the controlling collar 4 is locked, and the spring coil 3 is loosened so that the shafts 1 and 2 are disconnected from each other.

Other examples of spring clutches are described in GB-A-2 013 795 and US-A- 3 905 458.

US-A-3 905 458 discloses a spring clutch comprising: a rotary input shaft member; an output shaft member coaxial with the input shaft member; a coil member fitting around both the input and output shaft members for drivingly connecting and disconnecting the input and output shaft members; a rotary collar member coaxial with said input and output shafts, coupled to said coil member for controlling said driving connection and disconnection of said shaft members said collar member having engaging means thereon; a locking member movable relative to the collar member for engaging with and disengaging from the engaging means so that the collar member is locked upon the engagement and is unlocked upon the disengagement; an electromagnet for moving the locking member to an engaging position where the locking member engages with the engaging means of the collar member when the electromagnet is energised; and urging means for biasing the locking member away from the engaging position so that the locking member is retained in a position where the locking member does not engage with the engaging means of the collar member when the electromagnet is not energised.

An inherent problem with this prior art arrangement inevitably results from the fact that the electromagnet produces heat and a strong magnetic field in its immediate vicinity. If, as in US-A-3 905 458, the electromagnet is exposed coaxial with the shaft, the clutch mechanism is disposed to a strong magnetic flux which may degrade operation. Also, the heating effect may degrade operation of the clutch.

In accordance with the present invention, the axis of the electromagnet coil is disposed parallel to, and at a distance from the axis of the collar member and the shafts. As a result, the operative parts of the clutch are, in the main, exposed to a weaker magnetic flux than hitherto thereby producing weak magnetic effects by induction. Also, the heating effect is reduced. Furthermore, the attachment of one end of the coil member to the output shaft member provides for safer clutch operation.

Further features and advantages of the invention will become apparent from the following description of an embodiment of the invention given by way of illustrative example with reference to the accompanying drawings in which:

Figure 1 is a side-elevational view partly in seciton of a conventional spring clutch;

Figure 2 is a fragmentary front view of the spring clutch shown in Figure 1;

Figure 3 is a side-elevational view partly in section of a spring clutch according to the present invention; and

Figure 4 is a perspective view of a controlling collar of the clutch in Figure 3.

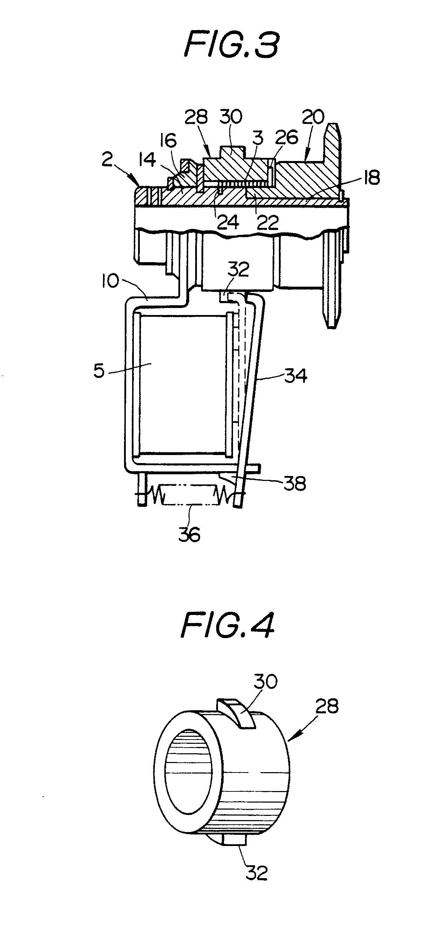

In Figures 3 and 4, parts in Figures 1 and 2 are designated by like reference numerals.

Figure 3 shows a spring clutch according to the present invention. A frame 10 supports the output shaft 2 which is of a hollow construction. The output shaft 2 is to be coaxially connected to the driven part of a mechanism such as the photoconductive drum of a laser printer, or the paper feeding roller of a copying machine. The output shaft 2 includes one end portion 14 and another end portion 18. The end portion 14 of the output shaft 2 is held by the upper portion of the frame 10 through a bushing 16. The other end portion 18 of the output shaft 2 has a smaller outer diameter than the end portion 14. An input shaft 20, i.e., a generally ring-shaped timing pulley fits slidably around the other end portion 18 for rotation about the output shaft 2. This pulley 20 is to be connected through a belt to the driving part of a mechanism such as a drive motor. The pulley 20 includes a boss portion 22 adjacent to the end portion 14 of the output shaft 2. The boss portion has an equal outer diameter to that of the end portion 14 of the output shaft 2. The coil spring 3 fits around both the end portion 14 of the output shaft 2 and the boss portion 22 of the pulley 20. One end 24 of the coil spring 3 is attached to the output shaft 2, while the other end 26 of the spring 3 is attached to a controlling collar member 28 which fits around the coil spring 3 for rotation about the common axis of the shafts 1, 2. As shown in Figure 4, the controlling collar 28 is provided on its outer face with two engaging projections 30 and 32 disposed at 180° angular intervals about its axis. Each engaging projection has a relatively smaller axial width in comparison with the axial length of the controlling collar 28, and is positioned at a generally intermediate portion of the controlling collar 28.

A locking arm 34 is vertically disposed and is connected at its lower end to that portion of the frame 10 directly under the controlling collar 28, for axial pivotal movement relative to the controller collar 28. The solenoid 5, i.e., an electromagnet is attached to the lower portion of the frame 10 so that it is arranged between the frame 10 and the locking arm 34 with its axis parallel to the axis of the input and output shafts 20 and 2. A spring 36 is disposed between the frame 10 and the lower end of the locking arm 34 in order to urge the locking arm 34 away from the solenoid 5. A stopper 38 is attached to the frame 10 for restricting the pivotal movement of locking arm 34.

When the solenoid 5 is not excited, the locking arm 34 is retained, due to the spring 36, in the position shown by the solid line in Figure 3. In this position, the upper end of the locking arm 34 is out of the locus the engaging projections 30 and 32, the locus being determined by the rotation of the controlling collar 28. That is, the controlling collar 28 is free from the constraint of the locking arm 34, and as is the coil spring 3. Thus, due to static friction between the pulley 20 and the spring coil 3, the rotation of the pulley 20 causes the coil spring 3 to wind tightly around both the pulley 20 and the output shaft 2 while causing the controlling collar 28 to rotate along with the pulley 20. Thus, the rotation of the pulley 20 causes the coil spring 3 to reduce its inner diameter and to firmly grasp both the pulley 20 and the output shaft 2. As a result, the pulley 20 and the output shaft 2 are drivingly connected to each other through the coil spring 3 so that a torque of the pulley 20 is transferred to the output shaft 2.

Subsequently, when the solenoid 5 is excited, the locking arm 34 is attracted to the solenoid 5, and thereby pivoted into the position shown by the phantom line in Figure 3 to contact with the solenoid 5. In this state, the upper end of the locking arm 34 is in the locus of the engaging projections 30 and 32 of the controlling collar 28. Therefore, the rotation of the pulley 20 causes a collision between the locking arm 34 and either of the projections 30 and 32 of the controlling collar 28, and further causes the projection which has had the collision to engage with the locking arm 34. Upon the collision, the controlling collar 28 is rotated slightly in the reverse direction to the direction in which the pulley 20 is rotated, which causes the coil spring 3 to increase its diameter. As a result, the coil spring 3 loosens its grasp on the shafts 2 and 20 so that the shafts 2 and 20 are drivingly disconnected from each other. In spite of the rotation of the pulley 20, as long as the controlling collar 28 is locked, the coil spring 3 does not wind around the shafts 2 and 20.

In addition, if the solenoid 5 is subequently de-energised, the locking arm 34 is released from the solenoid 5 and is moved, due to the spring 36, again into the position of the solid line shown in Figure 3. Thus, the pulley 20 and the output shaft 2 are drivingly connected again.

In this construction, it is unnecessary to energise the electromagnet in order to drivingly connect the input and output shaft member. Therefore, if the clutch is used in a mechanism such as a laser printer, the power consumption can be greatly lowered, and more reliable operation can be maintained in comparison with the case in which the conventional spring clutch is used.

Although in the preceding embodiment, the locking arm 34 is disposed vertically, it may be disposed in any direction. Also, instead of the two projections 30 and 32, the controlling collar may be provided with only one or more than two projections.

## Claims

1. A spring clutch comprising:
   a rotary input shaft member (20);
   an output shaft member (2) coaxial with the input shaft member (20);
   a coil member (3) fitting around both the input and output shaft members for drivingly connecting and disconnecting the input and output shaft members; a rotary collar member (28) coaxial with said input and output shafts, coupled to said coil member for controlling said driving connection and disconnection of said shaft members (2, 20) said collar member (28) having engaging means (30,32) thereon;

a locking member (34) movable relative to the collar member (28) for engaging with and disengaging from the engaging means (30,32) so that the collar member is locked upon the engagement and is unlocked upon the disengagement;

an electromagnet (5) for moving the locking member (34) to an engaging position where the locking member engages with the engaging means (30,32) of the collar member (28) when the electromagnet is energised; and

urging means (36) for biasing the locking member away from the engaging position so that the locking member (34) is retained in a position where the locking member does not engage with the engaging means (30,32) of the collar member (28) when the electromagnet (5) is not energised;

characterised in that the electromagnet (5) has a coil with its axis disposed parallel to, and at a distance from the common rotational axis of the collar member (28) and said shaft members (2, 20), and one end (24) of the coil member (3) is attached to the output shaft member (2).

2. A spring clutch according to claim 1, further comprising a frame member (10) supporting: the input and output shaft members (2, 20); the locking member (34); and the electromagnet coil (5), the locking member (34) having opposite ends, one end of the locking member being connected to the frame (10) for the axial pivotal movement of the other end of the locking member, the electromagnet (5) being disposed at a position such that the locking member contacts with the electromagnet in the engaging position.

3. A spring clutch according to claim 2, wherein the engaging means comprises at least one projection (30) formed on the outer face of the collar member.

**Revendications**

1. Accouplement à ressort comportant :

un élément d'arbre rotatif d'entrée (20) ;

un élément d'arbre de sortie (2) coaxial à l'élément d'arbre d'entrée (20) ;

un élément hélicoïdal (3) s'ajustant autour des deux éléments d'arbres d'entrée et de sortie pour les accoupler en prise d'entraînement et les désaccoupler ;

une bague rotative (28) coaxiale auxdits arbres d'entrée et de sortie, accouplée audit élément hélicoïdal afin de commander ledit accouplement de prise et le désaccouplement desdits éléments d'arbres (2, 20), ladite bague (28) portant des moyens d'enclenchement (30, 32) ;

un élément de blocage (34) mobile par rapport à la bague (28) pour s'enclencher avec les moyens d'enclenchement (30, 32) et s'en dégager, afin que la bague soit bloquée à la suite de l'enclenchement et soit débloquée à la suite du dégagement ;

un électro-aimant (5) destiné à déplacer l'élément de blocage (34) vers une position d'enclenchement dans laquelle l'élément de blocage s'enclenche avec les moyens d'enclenchement (30, 32) de la bague (28) lorsque l'électro-aimant est excité ; et

des moyens de sollicitation (36) destinés à rappeler l'élément de blocage à l'écart de la position d'enclenchement afin que l'élément de blocage (34) soit retenu dans une position dans laquelle l'élément de blocage ne s'enclenche pas avec les moyens d'enclenchement (30, 32) de la bague (28) lorsque l'électro-aimant (5) n'est pas excité ;

caractérisé en ce que l'électro-aimant (5) comporte une bobine dont l'axe est disposé parallèlement à, et à distance de, l'axe commun de rotation de la bague (28) et desdits éléments d'arbre (2, 20), et une extrémité (24) de l'élément hélicoïdal (3) est reliée à l'élément d'arbre de sortie (2).

2. Accouplement à ressort selon la revendication 1, comportant en outre un élément de bâti (10) supportant : les éléments d'arbre d'entrée et de sortie (2, 20) ; l'élément de blocage (34) ; et la bobine (5) d'électro-aimant, l'élément de blocage (34) ayant des extrémités opposées, une extrémité de l'élément de blocage étant reliée au bâti (10) afin de permettre le mouvement axial pivotant de l'autre extrémité de l'élément de blocage, l'électro-aimant (5) étant disposé dans une position telle que l'élément de blocage entre en contact avec l'électro-aimant dans la position d'enclenchement.

3. Accouplement à ressort selon la revendication 2, dans lequel les moyens d'enclenchement comprennent au moins une saillie (30) formée sur la face extérieure de la bague.

**Ansprüche**

1. Federkupplung mit einem sich drehenden Eingangswellenelement (20), einem Ausgangswellenelement (2), das mit dem Eingangswellenelement (20) koaxial ist, einem Schraubenfederelement (3), das sowohl um das Eingangswellen- als auch das Ausgangswellenelement paßt, um das Eingangswellenelement und das Ausgangswellenelement antriebsmäßig miteinander zu verbinden und voneinander zu trennen, einem sich drehenden Hülsenelement (28), das mit dem Eingangswellenelement und dem Ausgangswellenelement koaxial und mit dem Schraubenfederelement gekoppelt ist, um die antriebsmäßige Verbindung und Trennung der Wellenelemente (2, 20) zu steuern, wobei das Hülsenelement (28) auf ihm befindliche Eingriffsmittel (30, 32) besitzt, ein Verriegelungselement (34), das bezüglich des Hülsenelements (28) bewegbar ist, um mit den Eingriffsmitteln (30, 32) in Eingriff und außer Eingriff zu treten, so daß das Hülsenelement beim Eingriff verriegelt und beim Außereingrifftreten freigegeben wird, einen Elektromagneten (5), der dazu dient, das Verriegelungselement (34) in eine Eingriffsposition zu bewegen, in der das Verriegelungselement mit den Eingriffsmitteln (30, 32) des Hülsenelements (28) in Eingriff tritt, wenn der Elektromagnet eingeschaltet ist, und eine kraftausübende Einrichtung (36), die dazu dient, das Verriegelungselement von der Eingriffsstellung so weg vorzuspannen, daß das Verriegelungselement (34) in einer Position zurückgehalten wird, in der das Verriegelungselement mit den Eingriffsmitteln (30, 32) des Hülsenelements (28) nicht in Eingriff tritt, wenn der Elektromagnet (5) nicht eingeschaltet ist, dadurch **gekennzeichnet,** daß der Elektromagnet (5) eine Spule aufweist, deren Achse parallel zu und im Abstand von der gemeinsamen Rotationsachse des Hülsenelementes (28) und der Wellenelemente (2, 20) angeordnet ist, und daß ein Ende (24) des Schraubenfederelements (3) an dem Ausgangswellenelement (2) befestigt ist.

2. Federkupplung nach Anspruch 1, die weiterhin ein Rahmenelement (10) umfaßt, das folgende Bestandteile trägt: Die Eingangswellen- und Ausgangswellen-Elemente (2, 20), das Verriegelungselement (34) und die elektromagnetische Spule (5), wobei das Verriegelungselement (34) einander entgegengesetzte Enden aufweist, und wobei das eine Ende des Verriegelungselementes mit dem Rahmen (10) für eine axiale Schwenkbewegung des anderen Endes des Verriegelungselementes verbunden ist, und wobei der Elektromagnet (5) in einer Stellung so angeordnet ist, daß das Verriegelungselement in der Eingriffsstellung mit dem Elektromagneten in Berührung ist.

3. Federkupplung nach Anspruch 2, bei der das Eingriffselement wenigstens einen Vorsprung (30) umfaßt, der auf der äußeren Fläche des

Hülsenelementes ausgebildet ist.

## FIG. 1 (PRIOR ART)

## FIG.2 (PRIOR ART)

# FIG.3

# FIG.4